# EUROPÄISCHE PATENTSCHRIFT

(11) **EP 2 023 688 B1**
(45) Veröffentlichungstag und Bekanntmachung des Hinweises auf die Patenterteilung: **17.03.2010**
(21) Anmeldenummer: 07015272.3
(22) Anmeldetag: 03.08.2007
(51) Int. Cl.: H05B 3/36, F24D 13/02

(54) **Flächenheizsystem**
Panel heating system
Système de chauffage de surfaces

(43) Veröffentlichungstag der Anmeldung: 11.02.2009
(73) Patentinhaber: Frenzelit Werke GmbH & Co. KG, 95456 Bad Berneck (DE)
(72) Erfinder: Koch, Hans-Günther, 95460 Bad-Berneck (DE); Übelmesser, Peter, 95445 Bayreuth (DE)
(74) Vertreter: Pfenning, Meinig & Partner GbR

(56) Entgegenhaltungen:
- EP-A- 0 719 074
- EP-A- 1 429 080
- WO-A-87/04476
- WO-A-2004/097111
- WO-A-2006/103080
- DE-A1- 4 221 454
- DE-A1- 4 447 408

## Beschreibung

Die Erfindung betrifft eine elektrisch leitende Folie, die aus einer thermoplastischen Matrix und leitfähigen Verstärkungsfasern gebildet ist, wobei die leitfähigen Fasern annähernd isotrop in der leitfähigen Folie angeordnet sind und die elektrischen Kontakte integraler Bestandteil der Folie sind, sowie ein Verfahren zu deren Herstellung.

Leitfähige, flächige Werkstoffe, die leitfähige Fasern bzw. Beschichtungen enthalten, sind im Stand der Technik bekannt.

So beschreibt die US 4,534,886 elektrisch leitfähige Vliesstoffe bzw. Papiere, die 5 bis 50 Gew.-% leitfähige Partikel enthalten. Kennzeichen dieses leitfähigen Werkstoffs ist es, dass die leitfähigen Fasern durch einen Dispersionsbinder zusammengehalten werden und somit die Vliesbildung ermöglicht wird.

Nachteilig bei dieser Lösung ist, dass es sich hier um einen Vliesstoff handelt, der wenig robust und schwierig in der Handhabung ist und bei dem ein Abfasern, insbesondere der leitfähigen Fasern eintreten kann. Hier können sich also leitfähige Fasern aus dem Vliesverbund lösen und ganz oder bruchstückhaft herauswandern; damit werden Kontaktstellen zwischen den leitfähigen Fasern partiell aufgebrochen , was letztlich über einen Lichtbogen zur Funkenbildung und damit bis zur Entflammung führen kann. Ungünstig ist weiterhin, dass durch die Ausbildung als Vliesstoff keine stabile fixierte Anordnung der stromleitenden Komponenten (Fasern) vorliegt. Durch Belastung in z-Richtung (Flächenpressung) werden Kontaktstellen zwischen den leitfähigen Komponenten neu gebildet oder verbessert, so dass ein flächendruckabhängiger elektrischer Widerstand resultiert und somit auch kein definierter, reproduzierbarer Widerstand einstellbar ist. Die Kontaktbahnen werden dabei nur oberflächlich auf den leitfähigen Vliesstoff aufgeklebt.

Aus der DE 199 11 519 A1 ist ebenfalls ein elektrisch leitfähiger Werkstoff in Form eines Flächenheizers auf Vlies- oder Papierbasis bekannt. Auch dieser elektrisch leitfähige Werkstoff hat die zuvor beschriebenen Nachteile, da auch hier keine ausreichende Fixierung der leitfähigen Bestandteile erreicht wird. Der Werkstoff nach der DE 199 11 519 A1 wird zwar von zwei Kaschierfolien abgedeckt, ohne die Fasern des Werkstoffes, insbesondere auch die leitfähigen Fasern örtlich zusätzlich zu fixieren. Der lose Charakter bleibt erhalten. Die oberflächlich auf dem leitfähigen Werkstoff aufgeklebten Kontaktbahnen werden ebenfalls mit der Folie abgedeckt, mit der Folge, dass im Bereich der Kontaktbahnen ein Sandwich entsteht, das aus zwei Isolationsfolien, dem leitfähigen Werkstoff und der Kupferkontaktbahn besteht. Allein dieser Mehrschichtaufbau birgt die Gefahr des örtlichen kompletten Ablösens der Kontaktbahn; damit ändern sich die Übergangswiderstände mit der Folge von Spannungs- und Stromspitzen die zu örtlich heißen Stellen bis hin zur Funken- und Brandentwicklung führen können.

Eine weitere Lösung zur Realisierung eines elektrisch leitfähigen Werkstoffs in Schichtform ist aus der WO 01/43507 A1 bekannt. Bei diesem elektrisch leitfähigen Werkstoff werden dabei Gewebe, die in regelmäßigen Abständen leitfähige Kett- oder Schussfäden beinhalten, mit thermoplastischen Folien oder Geweben verpresst, um einen mehrlagigen Sandwichaufbau aus zwei Deckschichten und einer leitfähigen Gewebezwischenschicht zu bilden. Bei diesem flächigen leitfähigen Werkstoff ist neben dem aufwändigen Herstellungsverfahren aus mehreren Einzellagen insbesondere nachteilig, dass durch die elektrisch leitfähige Gewebezwischenschicht eine geringe Homogenität im Heizbild eintritt, da nur die elektrisch leitfähigen Kett- oder Schussfäden als Widerstandselement wirken und heiß werden können. Damit entsteht ein streifenförmiges Heizbild und keine wirklich flächig homogene Erwärmung.

Ferner ist aus der WO 2004/097111 A1 eine Faservliesmatte und ein Verfahren zur Herstellung eines entsprechenden Verbundwerkstoffes bekannt, bei der leitfähige Fasern eingearbeitet sind.

Aus der WO 2006/103080 A2 ist eine Flachenheizeinrichtung mit elektrischen Kontakten bekannt.

Ausgehend hiervon ist es Aufgabe der vorliegenden Erfindung, einen neuartigen elektrisch leitfähigen Werkstoff vorzuschlagen, bei dem keine leitfähige Beschichtung vorliegt, die im Anwendungsfall abreißt, abhebt oder absplittert und dann zu Problemen, wie Funkenbildung, örtliche Spannungs- und damit Temperaturspitzen führt und damit ein Sicherheitsrisiko darstellt.

Im leitfähigen Werkstoff sollen die leitfähigen Bestandteile sicher und fest verankert sein, so dass die Kontaktstellen der leitfähigen Bestandteile definiert und unveränderlich fixiert sind. Der leitfähige Werkstoff soll weiterhin in der gesamten Fläche eine Konstanz der elektrischen Leitfähigkeit und damit des Flächenwiderstands aufweisen. Damit soll die Konstanz der elektrischen und thermischen Flächenleistung gewährleistet werden, so dass eine vielseitige Anwendung möglich wird. Weiterhin sollte der Werkstoff keine Druckabhängigkeit des elektrischen Widerstands besitzen und er sollte unabhängig von Umwelteinflüssen, wie Luftfeuchte, Nässe und sonstigen Medien sein. Die Kontaktbahnen des neuen Werkstoffes sollen dabei sicher und unveränderlich, ohne die Verwendung von Klebstoff und im Werkstoff inkorporiert vorliegen.

Eine weitere Aufgabe der vorliegenden Erfindung ist es, ein entsprechendes Herstellungsverfahren für einen derartigen elektrisch leitenden Werkstoff anzugeben.

Die Aufgabe wird in Bezug auf die Folie durch die Merkmale des Patentanspruchs 1 und in Bezug auf das Herstellungsverfahren durch die Merkmale des Patentanspruchs 29 gelöst.

Die Unteransprüche zeigen vorteilhafte Weiterbildungen auf.

Der erfindungsgemäß elektrisch leitende Werkstoff in Form einer Folie zeichnet sich dabei dadurch aus, dass die in der thermoplastischen Matrix enthaltenen Verstärkungsfasern, die mindestens teilweise aus leitfähigen Verstärkungsfasern gebildet sind, annähernd isotrop in der Folie, bezogen auf die x-/y-Richtung, vorliegen. Die elektrisch leitenden Fasern sind somit auch bezogen auf den Querschnitt der Folie homogen, annähernd isotrop in x-/y-Richtung und nicht orientiert in z-Richtung in der thermoplastischen Matrix eingebettet. Durch diese Faserorientierung wird erreicht, dass das Verhältnis der elektrischen Leitfähigkeit von der x- zur y-Richtung sich dabei von 1 zu 3, bevorzugt 1,2 zu 2,2 und besonders bevorzugt von 1,5 zu 2 bewegt. Dadurch, dass Langfasern mit einer bestimmten definierten Länge, nämlich von 0,1 bis 30 mm, eingesetzt werden und diese auch homogen in der thermoplastischen Matrix verteilt und fixiert sind, wird sichergestellt, dass eine netzwerkartige Verbindung der elektrisch leitenden Fasern untereinander vorliegt. Dieses leitfähige Netzwerk kann dann auch örtlich gestört werden, ohne dass ein Totalverlust der elektrischen Leitfähigkeit und damit der Funktion als elektrische Flächenheizung eintritt. Durch die erfindungsgemäße Ausgestaltung ist es somit z.B. auch möglich, durch Ausstanzungen und/oder Perforierungen die elektrische Leitfähigkeit der Folie gezielt einzustellen. Bei der erfindungsgemäßen leitfähigen Folie ist weiterhin hervorzuheben, dass dadurch, dass die elektrisch leitfähigen Verstärkungsfasern in die thermoplastische Matrix wie vorstehend beschrieben fest eingebettet und damit fixiert sind, ein sehr stabiler Verbund entsteht. Durch das zusätzliche Einbringen von Verstärkungsfasern (ohne elektrische Leitfähigkeit) können damit auch die mechanischen Eigenschaften der Folie entsprechend dem Anwendungsfall gesteuert werden. Weitere Vorteile der erfindungsgemäßen leitfähigen Folie sind die folgenden:
- keine Folienkaschierung und kein Kaschierkleber notwendig, damit keine Kleberalterung mit Möglichkeiten der Änderung des elektrischen Übergangswiderstandes,
- einlagiges System, damit keine Gefahr der Lagentrennung (Delamination),
- hohe innere Festigkeit innerhalb der Folie,
- keine Gefahr der inneren Trennung der Folie mit der Gefahr von offen liegenden leitfähigen Faserenden und der Gefahr der Funkenbildung und der Brandentwicklung,
- keine Zerstörung der leitfähigen Fasern durch Knick- oder Walkbeanspruchung,
- keine Gefahr von Funkenbildung durch leitfähige, freie Faserbruchstücke,
- inkorporierte, höhengleiche metallische Leiterbahnen,
- alterungstabile Anbindung der Leiterbahn ohne Kleber,
- homogenes, vollflächiges Heizbild,
- lokale Beschädigungen der Heizfolie stören die grundlegende Funktion nicht,
- keine flächendruckabhängige Veränderung des elektrischen Widerstandes,
- feuchtigkeitsunabhängiger, elektrischer Widerstand.

Bei der erfindungsgemäßen elektrisch leitfähigen Folie können die mechanischen Eigenschaften durch Auswahl des Thermoplasten und der Fasern und deren Konzentration bzw. Mischungsverhältnis sowie der Dicke der Folie definiert werden. Damit können Parameter wie Dehnung, Zugfestigkeit und E-Modul, Biegewechselbeständigkeit und ähnliches, gezielt so eingestellt werden, dass z.B. ein robustes, baustellengeeignetes Heizfoliensystem entsteht. Dadurch, dass bei den erfindungsgemäßen leitfähigen Folien die leitfähigen Fasern annähernd isotrop und homogen innerhalb der thermoplastischen Matrix angeordnet sind, kann eine elektrische Leitfähigkeit auf den Oberflächen der Folie nicht ausgeschlossen werden. Beim Betrieb im sog. Schutzkleinspannungsbereich (SELV-Bereich) ist die vorliegende Folie ohne zusätzliche Oberflächenisolation einsetzbar. Die elektrisch leitfähige Folie ist jedoch auch ohne weiteres für höhere Spannungen anwendbar, wenn die Oberflächen der leitfähigen Folie elektrisch isoliert werden.

Bei der erfindungsgemäßen leitfähigen Folie ist es dabei bevorzugt, wenn die elektrisch leitfähigen Verstärkungsfasern eine Länge von 0,1 bis 30 mm, bevorzugt von 2 bis 18 mm, und besonders bevorzugt von 3 bis 6 mm, aufweisen. Die Längenauswahl der Faser ist deshalb wichtig, weil durch derartige leitfähige Langfasern sichergestellt werden kann, dass die elektrische Leitfähigkeit durch die Ausprägung eines elektrisch leitfähigen homogenen Netzwerkes in der Folie selbst erzielt wird. Günstig ist es hierbei wiederum, wenn die Fasern maximal eine Dicke von 1 bis 15 µm, besonders bevorzugt von 5 bis 8 µm, aufweisen. Durch Auswahl derartiger Fasern ist es auch möglich, mit relativ niedrigen Konzentrationen von leitfähigen elektrischen Verstärkungsfasern noch eine Leitfähigkeit der Folie selbst darzustellen. Gemäß der vorliegenden Erfindung ist es vorgesehen, dass in der thermoplastischen Matrix 3 bis 45 Gew.-% an Verstärkungsfasern enthalten sind, wobei günstigerweise der Anteil der elektrisch leitfähigen Verstärkungsfasern mindestens 0,1 Gew.-%, bevorzugt 0,5 bis 20 Gew.-%, betragen muss. Die Anmelderin konnte dabei zeigen, dass es möglich ist, auch mit geringsten Mengen an elektrisch leitfähigen Verstärkungsfasern, z.B. mit 0,5 Gew.-%, noch leitfähige Folien mit einem hohen elektrischen Widerstand herzustellen, die bei der Verwendung von Normalspannung (230 V) ausreichend niedrige elektrische Flächenleistungen und damit geringe Temperaturen ermöglichen.

Durch die erfindungsgemäße homogene annähernd isotrope Verteilung der Fasern mit den vorgegebenen Parametern ist es auch möglich, die elektrischen Eigenschaften der thermoplastischen Folie zu steuern. So kann die elektrische Leitfähigkeit der erfindungsgemäßen Folie bei einer vorgegebenen Dichte der Folie durch die einzusetzende Menge (Gewichtsanteil) der leitfähigen Verstärkungsfaser gesteuert werden. Andererseits ist es auch möglich, dass bei einem vorgegebenen Gewichtsanteil der leitfähigen Verstärkungsfaser an der thermoplastischen Matrix durch Variation der Dichte der Folie eine entsprechende Variation der elektrischen Leitfähigkeit erreicht wird, da dadurch die Anzahl der Kontaktstellen beeinflusst werden kann. Letztlich ist auch eine Beeinflussung der elektrischen Leitfähigkeit der Folie dadurch möglich, dass an der Folie bei vorgegebenen Anteil an der leitfähigen Verstärkungsfaser bzw. bei einer vorgegebenen Dichte der Folie durch Perforierungen und/oder Stanzungen der Folie eine Reduzierung Veränderung der leitfähigen Fläche. Diese Ausführungsform hat den entscheidenden Vorteil, dass die Folie überall dort eingesetzt werden kann, wo es sinnvoll ist, dass durch die Ausstanzungen oder Perforierungen z.B. Bindemittel oder Klebemittel hindurch dringen können, ohne dass die Leitfähigkeit beeinträchtigt wird. Dies ist insbesondere im Bausektor sinnvoll, bei Einsatz der Heizfolie zwischen Fliesen und Estrich; hier wird eine gute Verbundhaftung durch hindurch dringenden Fliesenkleber erzielt. Beim Aufbau von Verbundwerkstoffen ist es ebenfalls vorteilhaft, wenn einseitig aufgetragener Kleber durch die Perforation dringt und eine gute Verbindung der Schichten ermöglicht.

Die Möglichkeit des Einbringens von Ausstanzungen und/oder Perforierungen erlaubt es auch, dass in die Folie selbst Muster, z.B. Namen oder Marken, in einer vorbestimmten Weise in die Folie eingebracht werden. Dadurch kann eine Unverwechselbarkeit der leitfähigen Folie sichergestellt werden, die selbst im verbauten Zustand noch durch Thermografie sichtbar gemacht werden kann.

Die Folie nach der Erfindung kann dabei eine Dichte von 0,25 g/cm³ bis 6 g/cm³, bevorzugt von 0,8 bis 1,9 g/cm³ aufweisen. Die Folie kann abhängig von den eingestellten Verfahrensparametern auf eine Dicke im Bereich zwischen 30 µm bis 350 µm eingestellt werden.

Ein weiterer Vorteil der erfindungsgemäßen Folie ist auch darin zu sehen, dass der elektrische Kontakt integraler Bestandteil der thermoplastischen Matrix, d.h. der elektrisch leitenden Folie ist. Zur Realisierung einer derartigen Ausführungsform der vorliegenden Erfindung ist es dabei lediglich erforderlich, beim Herstellungsverfahren wie nachfolgend beschrieben, die metallische Kontaktbahn mit in der Folie zu integrieren. Der elektrische Kontakt ist dabei bevorzugt als Leiterbahn ausgebildet. In einer bevorzugten Ausführungsform ist ein derartiger elektrischer Kontakt eine metallische Kontaktbahn, bevorzugt eine Kupferfolie.

Als Vorteile sind die folgenden zu nennen:
- mechanisch robuste Kontaktierung und Schutz der Leiterbahn ohne erhabene Übergangsstelle als potentielle mechanische oder optische Fehlstelle (Wandheizung z.B. hinter Tapeten),
- Vermeidung der Alterungsproblematik von leitfähigen Klebern für die Kontaktierung,
- Verhinderung von Korrosionsproblemen an der Übergangsstelle von Heizleiter zu Kupferkontakt,
- Es können zusätzlich an der Oberseite korrosionsgeschützte Kontaktbahnen z.B. aluminiumplattierte Kupferkontaktbahnen bündig in die Folie eingebracht werden
- sichere klebstofffreie Anbindung der metallischen Kontaktbahn ermöglicht alle Arten der elektrischen Anschlusstechnik sowie der Verbindungstechnik von Heizfolienbahnen untereinander:
   - Krimpen,
   - Kraftschlüssige Verbindung mit Fächerscheiben,
   - Löten,
   - Schweißen (Ultraschall-, Laser-, Punktschweißen),
   - Nieten,
   - Steckverbindungen,
   - Druckknöpfe,
   - handelsübliche elektrisch leitfähige Klebetapes.

Die erfindungsgemäße Ausgestaltung der leitfähigen Folie ermöglicht es weiterhin, dass nicht nur eine Kaschierung der beiden Oberflächen der Folie mit einer isolierenden Schicht möglich ist, sondern dass die elektrisch leitfähige Folie auch durch ein entsprechendes Formwerkzeug in eine dreidimensionale Form gebracht werden kann.

Aus stofflicher Sicht sind für die erfindungsgemäße elektrisch leitfähige Folie für die leitfähigen Verstärkungsfasern insbesondere Kohlenstofffasern, Metallfasern, leitfähig dotierte thermoplastische Fasern geeignet.

Bei den weiteren Verstärkungsfasern sind alle an und für sich aus dem Stand der Technik bekannten Verstärkungsfasern einsetzbar. Beispiele für geeignete Verstärkungsfasern sind Glasfasern, Aramidfasern, Keramikfasern, Polyetherimidfasern, Polybenzooxazolfasern, Naturfasern und/oder deren Mischungen. Diese Verstärkungsfasern können prinzipiell die gleichen Dimensionen aufweisen, wie die schon vorstehend beschriebenen elektrisch leitfähigen Verstärkungsfasern. Geeignete Faserlängen sind somit 0,1 bis 30 mm, bevorzugt 6 bis 18 mm und besonders bevorzugt 6 bis 12 mm.

Als thermoplastische Matrix sind grundsätzlich alle thermoplastischen Werkstoffe einsetzbar. Geeignete Beispiele hierfür sind Thermoplaste ausgewählt aus Polyetherketonen, Poly-p-phenylensulfid, Polyetherimid, Polyethersulfon, Polyethylen, Polyethylenterephthalat, Perfluor-Alkoxy-Polymer, Polyamid und/oder Polysulfone.
Je nach Temperaturbeständigkeit der Thermoplaste können so Heizfolien dargestellt werden, die im Temperaturbereich bis kurzfristig 300°C und dauerhaft immer noch über 220°C eingesetzt werden können. Zur Steuerung der Eigenschaften der elektrisch leitfähigen Folie können weiterhin Additive bevorzugt in einer Gewichtsmenge bis 10 Gew.-% enthalten sein. Als Additive sind hier zu nennen Binder, und zwar bevorzugt diejenigen Binder, die bei der Herstellung der Faservliesmatte, wie nachfolgend noch beschrieben wird, eingesetzt werden. Weitere geeignete Additive sind tribologisch wirksame Zusätze, Zusätze für die Festigkeit, Schlagzähigkeit, Temperaturbeständigkeit, Wärmeleitfähigkeit, Abrasionsbeständigkeit und/oder elektrischen Leitfähigkeit.

Die Additive werden dabei bevorzugt in Form von Fasern, Fibrillen, Fibriden, Pulpen, Pulvern, Nanopartikel und Nanofasern und/oder Mischungen hiervon eingesetzt.

Aus stofflicher Sicht sind geeignete Beispiele für die Additive in Bezug auf die Binder Verbindungen auf der Basis von Polyacrylat, Polyvinylacetat, Polyvinylalkohol, Polyurethan, Harzen, Polyolefinen, aromatischen Polyamiden und/oder Copolymeren hiervon.

Die Erfindung betrifft weiterhin ein Verfahren zur Herstellung der vorstehend beschriebenen leitfähigen Folie.

Erfindungsgemäß wird dabei so vorgegangen, dass in einem ersten Schritt eine Faservliesmatte hergestellt wird und dass dann diese Faservliesmatte nach Einbringung der Kontakte durch Verpressen unter Druck in einem beheizten Werkzeug zur leitfähigen Folie umgewandelt wird.

Wesentliches Element beim erfindungsgemäßen Verfahren ist dabei die Herstellung der Faservliesmatte. Die Herstellung der Faservliesmatte erfolgt dabei grundsätzlich analog der EP 1 618 252 B1. Darin ist eine Faservliesmatte und ein Verfahren zu dessen Herstellung beschrieben. Wesentliches Element dieses Verfahrens ist es dabei, dass sog. Schmelzfasern und Verstärkungsfasern eingesetzt werden, aus denen dann die Faservliesmatte gebildet wird. Die Schmelzfasern sind genau diejenigen Fasern, die im späteren Verfahrensgang die thermoplastische Matrix bilden. Durch den Herstellungsprozess dieser Faservliesmatte ist es dabei möglich, die Verstärkungsfasern, die im vorliegenden Falle mindestens teilweise durch elektrisch leitfähige Verstärkungsfasern gebildet sind, durch ein geeignetes Ablegungsverfahren auf einem schräg laufenden Sieb eine entsprechende Verteilung der Schmelzfasern und der elektrisch leitfähigen Verstärkungsfasern zu realisieren. Bei diesem Verfahrensgang können auch durch entsprechende Mischungsverhältnisse der leitfähigen Fasern und der Verstärkungsfasern die physikalischen Eigenschaften der leitfähigen Folie eingestellt werden.

Bei der Herstellung der Faservliesmatte können dabei selbstverständlich auch wie schon aus der EP 1 618 252 B1 noch entsprechende Additive zugegeben werden, um eine weitere Beeinflussung der elektrisch leitfähigen Folie zu erreichen. Wesentliches Element ist dabei, dass entsprechende Binder zugegeben werden und zwar hier beim Verfahrensschritt a), um eine Fixierung der Faservliesmatte als solches aus Schmelzfasern und Verstärkungsfasern zu erreichen.

Das Einlegen der elektrischen Kontakte (Verfahrensschritt b) kann auch während des Verfahrensschrittes a), d.h. während der Herstellung der Faservliesmatte oder beim nachfolgenden Verpressungsschritt (Verfahrensschritt c), erfolgen, so dass diese Kontakte als integraler Bestandteil der erfindungsgemäßen elektrisch leitfähigen Folie vorliegen.

In Bezug auf die Mengenverhältnisse, die beim Verfahren einzusetzen sind, wie auch auf die stoffliche Auswahl, wird auf die vorstehende Beschreibung der elektrisch leitfähigen Folie verwiesen.

Die Erfindung betrifft weiterhin die Verwendung der leitfähigen Folie, wie vorstehend beschrieben, als Flächenheizung. Es hat sich gezeigt, dass die erfindungsgemäße Folie insbesondere für Niedertemperaturanwendungen in Boden-, Wand-, Deckenheizungen sowohl im Baubereich als auch in automobilen Anwendungen geeignet ist.

Insbesondere für die Anwendung im Bau kann es auch günstig sein, wenn zur Erzielung einer Mindesthaftung zwischen Fliesen und Heizfolie und/oder Estrich noch ein Primer auf die Folie aufgebracht wird. Derartige Primer sind an und für sich aus dem Stand der Technik bekannt.

Die Rollenform der Heizfolie ermöglicht ein einfaches, bahnförmiges Auslegen auch von großen Raumflächen. Die Kontaktierung erfolgt dabei einfach und wirtschaftlich über die Parallelschaltung der ausgelegten Bahnen unter Verwendung von Ringleitungen, Kontaktschienen oder Kontaktbrücken oder dergleichen.

Darüberhinaus erwiesen sich besondere Ausführungsformen geeignet als Hochtemperaturstrahlungsheizungen, Begleitheizungen und als Energiequelle für Prozesswärme.

In weiteren Applikationen ist die Flächenheizung geeignet als:
- Spiegelheizung
- Zusatzheizung in Klimaanlagen
- Sitzheizung
- Heizung elektronischer Bauteile

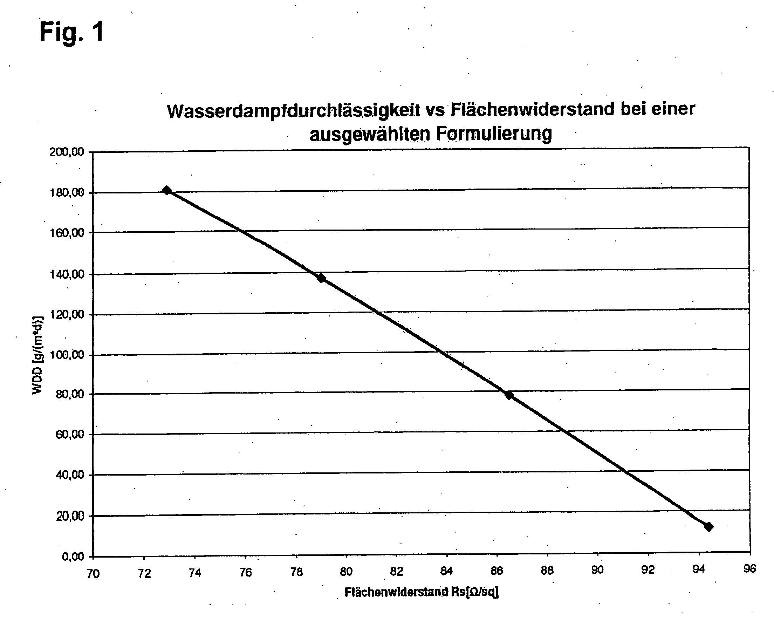

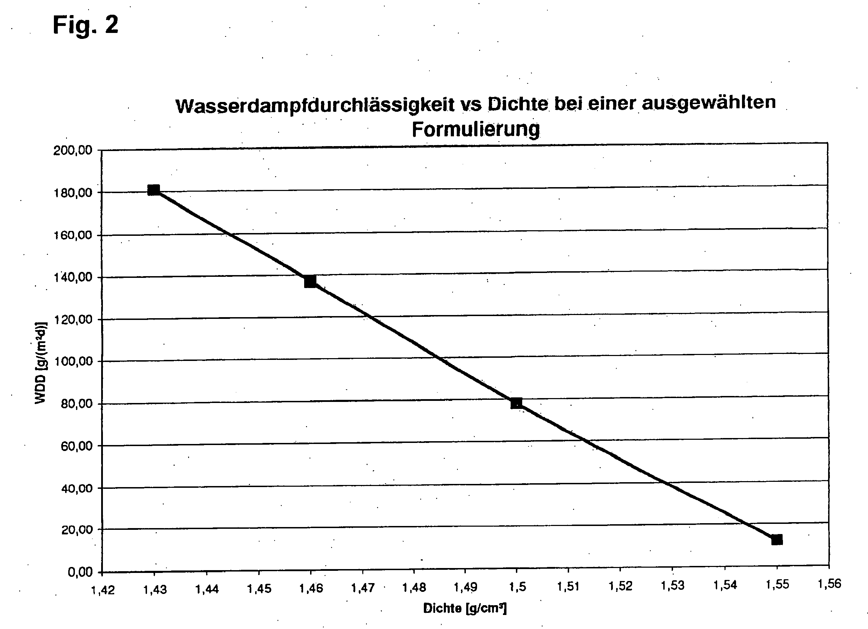

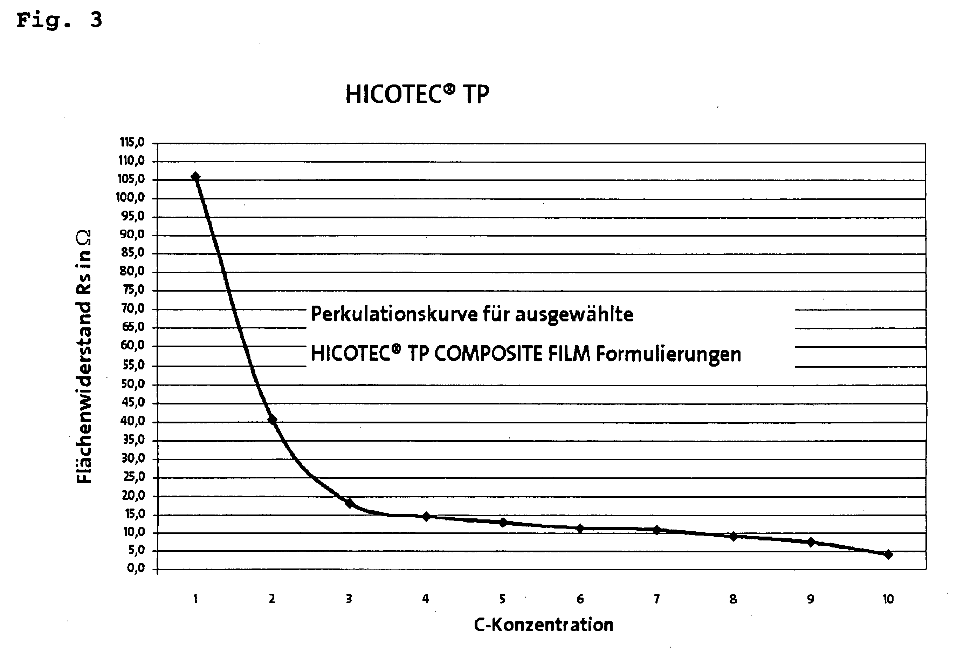

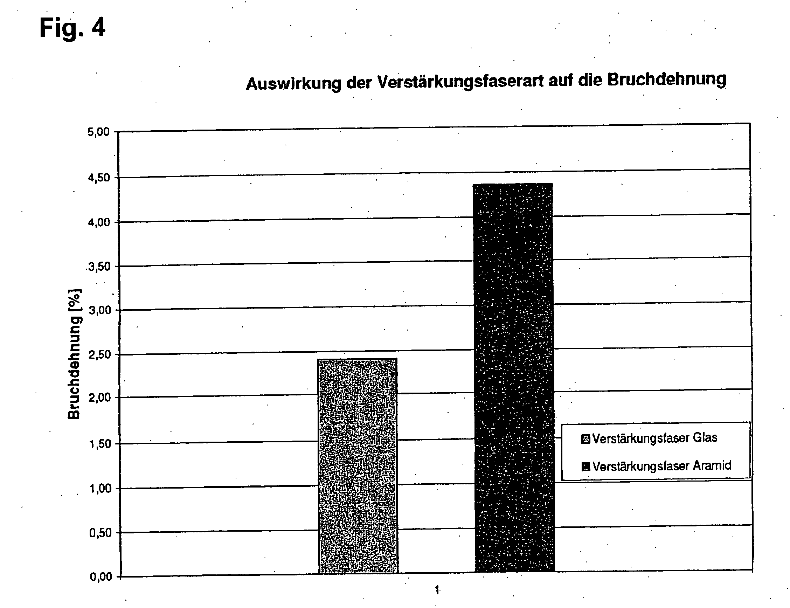

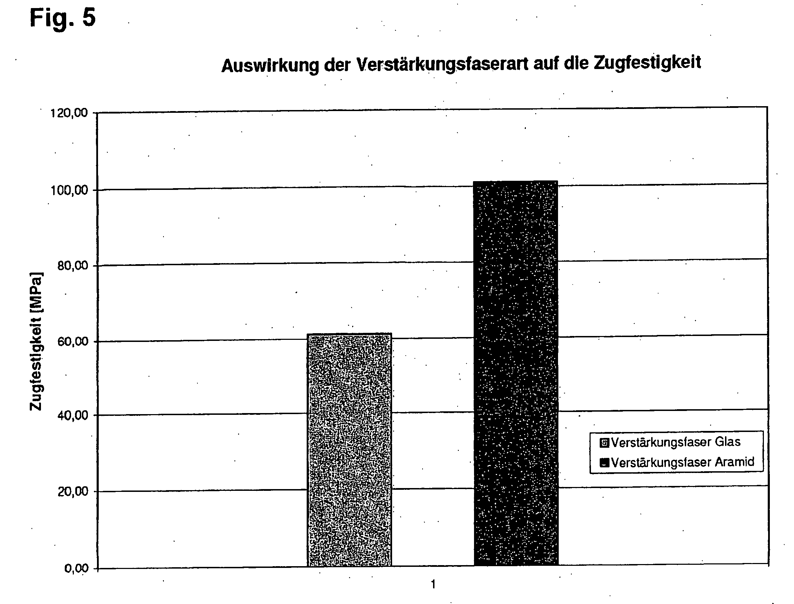

Die Erfindung wird nachfolgend anhand von Formulierungsbeispielen und Untersuchungsergebnissen mit den Figuren 1 bis 5 näher erläutert.

### 1. Formulierungsbeispiele

### 1.1. HICOTEC TP-1

| | |
|---|---|
| Matrix: | 60 Gew.-% PET |
| Leitfähige Fasern: | 3 Gew.-% Carbonfaser |
| Verstärkungsfasern: | 32 Gew.-% Glasfaser + Aramidfaser |
| Binder: | 5 Gew.-% |

### 1.2. HICTOEC TP-2 und 3

| | |
|---|---|
| Matrix: | 75 Gew.-% PET |
| Leitfähige Fasern: | 3,9 Gew.-% Carbonfaser |
| Verstärkungsfasern: | 16,1 Gew.-% Glas oder Aramid |
| Binder: | 5 Gew.-% |

### 2. Untersuchungsergebnisse

Figur 1 zeigt in einer Graphik anhand des Werkstoffs HICOTEC TP-1 (siehe Formulierungsbeispiel 1.1.) die Wasserdampfdurchlässigkeit in Abhängigkeit vom Flächenwiderstand.

Figur 2 zeigt für das gleiche Formulierungsbeispiel (HICOTEC TP-1) die Wasserdampfdurchlässigkeit in Abhängigkeit von der Dichte. Die Dichtevariation ist durch Variation des Verpressungsdrucks erzeugt worden. Die Graphik ist exemplarisch für v = 2m/min erstellt.

Figur 3 zeigt die Abhängigkeit des Flächenwiderstands von der Konzentration an leitfähigen Kohlenstofffasern.

In den Figuren 4 und 5 ist beispielhaft dargestellt, wie sich die Auswahl der Verstärkungsfasern auf die Bruchdehnung (Figur 4) und auf die Zugfestigkeit (Figur 5) auswirkt. In der Graphik sind dabei sowohl die Werte der Bruchdehnung für die Verstärkungsfaser Glas (Formulierung HICOTEC TP-2) als auch für die Formulierung HICOTEC TP-3 (Aramid) gezeigt.

## Patentansprüche

1. Elektrisch leitende Folie, die aus einer thermoplastischen Matrix mit 3 bis 45 Gew.-% Verstärkungsfasern und elektrischen Kontakten gebildet ist,
wobei die Verstärkungsfasern mindestens teilweise aus elektrisch leitfähigen Verstärkungsfasern mit einer Faserlänge von 0,1 bis 30 mm bestehen und dass mindestens die elektrisch leitfähigen Verstärkungsfasern in der Folie annähernd isotrop in x-y-Richtung in der thermoplastischen Matrix vorliegen, **dadurch gekennzeichnet dass** der elektrische Kontakt integraler Bestandteil der leitfähigen Folie ist und bahnförmig mindestens in zwei Randbereichen der Folie ausgebildet ist.

2. Elektrisch leitfähige Folie nach Anspruch 1,
**dadurch gekennzeichnet, dass** sich das Verhältnis der elektrischen Leitfähigkeit von der x- zur y-Richtung dabei von 1 zu 3, bevorzugt von 1,2 zu 2,2 bewegt.

3. Leitfähige Folie nach Anspruch 1 oder 2,
**dadurch gekennzeichnet, dass** die leitfähigen Verstärkungsfasern eine Faserlänge im Bereich von 2 bis 18 mm, bevorzugt von 3 bis 6 mm aufweisen.

4. Leitfähige Folie nach mindestens einem der Ansprüche 1 bis 3,
**dadurch gekennzeichnet, dass** mindestens die leitfähigen Verstärkungsfasern eine Dicke von 1 bis 15 µm, bevorzugt von 5 bis 8 µm, aufweisen.

5. Elektrisch leitfähige Folie nach mindestens einem der Ansprüche 1 bis 4,
**dadurch gekennzeichnet, dass** die leitfähigen Verstärkungsfasern ausgewählt sind aus Kohlenstofffasern, Metallfasern und/oder leitfähig dotierten thermoplastischen Fasern.

6. Leitfähige Folie nach mindestens einem der Ansprüche 1 bis 5,
**dadurch gekennzeichnet, dass** der Anteil der elektrisch leitfähigen Verstärkungsfasern mindestens 0,1 Gew.-% bis 20 Gew.-%, bevorzugt 0,5 bis 20 Gew.-%, beträgt.

7. Leitfähige Folie nach mindestens einem der Ansprüche 1 bis 6,
**dadurch gekennzeichnet, dass** neben den elektrisch leitfähigen Fasern weitere Verstärkungsfasern ausgewählt aus Glasfasern, Aramidfasern, Keramikfasern, Polyetherimidfasern, Polybenzoxazolfasern, Naturfasern und/oder deren Mischungen vorliegen.

8. Leitfähige Folie nach Anspruch 7,
**dadurch gekennzeichnet, dass** die weiteren Verstärkungsfasern eine Faserlänge von 0,1 bis 30 mm, bevorzugt von 6 bis 18 mm, besonders bevorzugt von 6 bis 12 mm aufweisen.

9. Leitfähige Folie nach mindestens einem der Ansprüche 1 bis 8,
**dadurch gekennzeichnet, dass** die thermoplastische Matrix aus einem Thermoplasten ausgewählt aus Polyetherketonen, Poly-P-phenylensulfid, Polyetherimid, Polyethersulfon, Polyethylen, Polyethylenterephthalat, Perfluor-Alkoxy-Polymer, Polyamid und/oder Polysulfon gebildet ist.

10. Leitfähige Folie nach mindestens einem der Ansprüche 1 bis 9,
**dadurch gekennzeichnet, dass** sie zusätzlich bis zu 20 Gew.-%, bevorzugt bis zu 10 Gew.-%, besonders bevorzugt bis 7 Gew.-%, Additive enthält.

11. Leitfähige Folie nach Anspruch 10,
**dadurch gekennzeichnet, dass** als Additive Binder, tribologisch wirksame Zusätze, Zusätze für die Festigkeit, Schlagzähigkeit, Temperaturbeständigkeit, Wärmeleitfähigkeit, Abrasionsbeständigkeit und/oder elektrische Leitfähigkeit, enthalten sind.

12. Leitfähige Folie nach Anspruch 10 oder 11,
**dadurch gekennzeichnet, dass** die Additive in Form von Fasern, Fibrillen, Fibriden, Pulpen, Pulvern, Nanopartikeln, Nanofasern und/oder Mischungen hiervon, eingesetzt werden.

13. Leitfähige Folie nach Anspruch 11,
**dadurch gekennzeichnet, dass** der Binder ausgewählt ist aus Verbindungen, die auf Basis von Polyacrylat, Polyvinylacetat, Polyvinylalkohol, Polyurethan, Harzen, Polyolefinen, aromatischen Polyamiden oder Copolymeren hiervon oder Mischungen hiervon aufgebaut sind.

14. Leitfähige Folie nach mindestens einem der Ansprüche 1 bis 13,
**dadurch gekennzeichnet, dass** die elektrische Leitfähigkeit der Folie bei einem vorgegebenen Gewichtsanteil der leitfähigen Verstärkungsfaser durch Variation der Dichte der Folie eingestellt ist.

15. Leitfähige Folie nach mindestens einem der Ansprüche 1 bis 13,
**dadurch gekennzeichnet, dass** die elektrische Leitfähigkeit der Folie bei einer vorgegebenen Dichte der Folie durch Auswahl des Gewichtsanteils der elektrisch leitfähigen Verstärkungsfaser eingestellt ist.

16. Elektrisch leitfähige Folie nach mindestens einem der Ansprüche 1 bis 15,
**dadurch gekennzeichnet, dass** die Folie Ausstanzungen gleicher oder unterschiedlicher Geometrie aufweist.

17. Elektrisch leitfähige Folie nach einem der Ansprüche 1 bis 16,
**dadurch gekennzeichnet, dass** die Folie Perforierungen aufweist.

18. Elektrisch leitfähige Folie nach Anspruch 16 oder 17,
**dadurch gekennzeichnet, dass** die Perforierungen und/oder die Ausstanzungen ein Muster bilden.

19. Elektrisch leitfähige Folie nach mindestens einem der Ansprüche 1 bis 18,
**dadurch gekennzeichnet, dass** die elektrische Leitfähigkeit der Folie bei vorgegebener Dicke und/oder einem vorgegebenen Gewichtsanteil der leitfähigen Verstärkungsfasern durch die Perforierungen und/oder die Ausstanzungen eingestellt ist.

20. Elektrisch leitfähige Folie nach mindestens einem der Ansprüche 1 bis 19,
**dadurch gekennzeichnet, dass** sie eine Dichte aufweist von 0,25 g/cm³ bis 6 g/cm³.

21. Leitfähige Folie nach mindestens einem der Ansprüche 1 bis 20,
**dadurch gekennzeichnet, dass** sie eine Dicke im Bereich zwischen 30 bis 350 µm aufweist.

22. Leitfähige Folie nach mindestens einem der Ansprüche 1 bis 21,
**dadurch gekennzeichnet, dass** der elektrische Kontakt durch eine metallische Kontaktbahn gebildet ist.

23. Leitfähige Folie nach Anspruch 22,
**dadurch gekennzeichnet, dass** die leitfähige Kontaktbahn eine Kupferfolie ist.

24. Leitfähige Folie nach mindestens einem der Ansprüche 1 bis 23,
**dadurch gekennzeichnet, dass** sie in Plattenform vorliegt und dass mindestens zwei Platten untereinander über Kontaktstellen elektrisch leitend miteinander verbunden sind.

25. Leitfähige Folie nach Anspruch 24,
**dadurch gekennzeichnet, dass** die Verbindung durch Krimpen, Fächerscheiben, Löten, Schweißen, Nieten, Steckverbindungen, Druckknöpfe und/oder Klebetapes erfolgt.

26. Leitfähige Folie nach mindestens einem der Ansprüche 1 bis 25,
**dadurch gekennzeichnet, dass** die Folie dreidimensional verformt ist.

27. Leitfähige Folie nach mindestens einem der Ansprüche 1 bis 26,
**dadurch gekennzeichnet, dass** auf mindestens einer Oberfläche eine Schicht aus bevorzugt einem elektrisch isolierenden Material aufgebracht ist.

28. Leitfähige Folie nach Anspruch 27,
**dadurch gekennzeichnet, dass** sie beidseitig mit einer isolierenden Schicht versehen ist.

29. Verfahren zur Herstellung einer elektrisch leitfähigen Folie nach mindestens einem der Ansprüche 1 bis 28 durch folgende Schritte:
a) Herstellung einer Faservliesmatte aus einer thermoplastischen Schmelzfaser, zur Bildung der thermoplastischen Matrix, und den Verstärkungsfasern,
b) Einbringung der bahn förmigen elektrischen Kontakte und
c) Verpressen der Faservliesmatte unter Druck in einem beheizten Werkzeug zur Bildung der elektrisch leitfähigen Folie
wobei die bahn förmigen elektrischen Kontakte als integraler Bestandteil der leitfähigen Folie ausgebildet werden.

30. Verfahren nach Anspruch 29,
**dadurch gekennzeichnet, dass** zur Herstellung der Faservliesmatte 55 bis 97 Gew.-% Schmelzfaser und 3 bis 45 Gew.-% Verstärkungsfasern eingesetzt werden, wobei die Faserlänge der Schmelzfaser kleiner ist als die der Verstärkungsfaser.

31. Verfahren nach Anspruch 29 oder 30,
**dadurch gekennzeichnet, dass** bei der Herstellung der Faservliesmatte als Additiv 1 bis 10 Gew.-% eines Binders zugesetzt werden.

32. Verfahren nach mindestens einem der Ansprüche 29 bis 31,
**dadurch gekennzeichnet, dass** die Faserlänge der Schmelzfaser im Bereich von 2 bis 6 mm, bevorzugt im Bereich von 2,5 bis 3,5 mm, liegt.

33. Verfahren nach mindestens einem der Ansprüche 29 bis 32,
**dadurch gekennzeichnet, dass** die Schmelzfaser ausgewählt ist aus Fasern aus Polyetheretherketon, Poly-P-phenylensulfid, Polyetherimid, Polyethersulfon, Polyethylen, Polyethylenterephthalat, Perfluor-Alkoxy-Polymer, Polyamid sowie Polysulfon und/oder Mischungen hiervon.

34. Verfahren nach mindestens einem der Ansprüche 29 bis 33,
**dadurch gekennzeichnet, dass** der Binder ausgewählt ist aus Verbindungen, die auf Basis von Polyacrylat, Polyvinylacetat, Polyvinylalkohol, Polyurethan, Harzen, Polyolefinen, aromatischen Polyamiden oder Copolymeren hiervon oder Mischungen hiervon aufgebaut sind.

35. Verfahren nach Anspruch 34,
**dadurch gekennzeichnet, dass** der Binder in Form von Fibrillen, Fibriden und/oder faserigen Bindern vorliegt.

36. Verfahren nach mindestens einem der Ansprüche 29 bis 35,
**dadurch gekennzeichnet, dass** während der Herstellung der Faservliesmatte (Verfahrensschritt a)) zusätzlich weitere Additive zugesetzt werden.

37. Verfahren nach mindestens einem der Ansprüche 29 bis 36,
**dadurch gekennzeichnet, dass** die Faservliesmatte auf eine Flächenmasse von 8 bis 400 g/m² eingestellt wird.

38. Verfahren nach mindestens einem der Ansprüche 29 bis 37,
**dadurch gekennzeichnet, dass** die Faservliesmatte eine Dicke von 0,1 mm bis 4 mm aufweist.

39. Verfahren nach einem der Ansprüche 29 bis 38,
**dadurch gekennzeichnet, dass** als Kontakt Kupferbahnen eingelegt werden.

40. Verfahren nach einem der Ansprüche 29 bis 39,
**dadurch gekennzeichnet, dass** die Verpressung der Faservliesmatte (Verfahrensschritt c)) bei einem Druck von 0,05 bis 15 N/mm² erfolgt.

41. Verfahren nach mindestens einem der Ansprüche 29 bis 40,
**dadurch gekennzeichnet, dass** nach Bildung der leitfähigen Folie diese mindestens bereichsweise perforiert und/oder ausgestanzt wird.

42. Verwendung der leitfähigen Folie nach mindestens einem der Ansprüche 1 bis 28 als Fußbodenheizung unter Fliesen.

43. Verwendung der leitfähigen Folie nach mindestens einem der Ansprüche 1 bis 28 als Fußbodenheizung unter Holzfußböden.

## Claims

1. Electrically conductive foil formed from a thermoplastic matrix with 3 to 45% by weight of reinforcing fibres and electrical contacts,
where the reinforcing fibres are at least to some extent composed of electrically conductive reinforcing fibres with a fibre length of 0.1 to 30 mm, and at least the electrically conductive reinforcing fibres are present approximately isotropically in the x-y direction in the thermoplastic matrix within the foil,
**characterized in that** the electrical contact is an integral constituent of the conductive foil and takes the form of a track at least in two peripheral regions of the foil.

2. Electrically conductive foil according to Claim 1,
**characterized in that** the ratio of electrical conductivity of the x direction with respect to the y direction is 1 to 3, preferably 1.2 to 2.2.

3. Conductive foil according to Claim 1 or 2,
**characterized in that** the fibre length of the conductive reinforcing fibres is in the range 2 to 18 mm, preferably 3 to 6 mm.

4. Conductive foil according to at least one of Claims 1 to 3,
**characterized in that** the thickness at least of the conductive reinforcing fibres is 1 to 15 µm, preferably 5 to 8 µm.

5. Electrically conductive foil according to at least one of Claims 1 to 4,
**characterized in that** the conductive reinforcing fibres have been selected from carbon fibres, metal fibres and/or thermoplastic fibres doped so as to be conductive.

6. Conductive foil according to at least one of Claims 1 to 5,
**characterized in that** the proportion of the electrically conductive reinforcing fibres is at least 0.1% by weight to 20% by weight, preferably 0.5 to 20% by weight.

7. Conductive foil according to at least one of Claims 1 to 6,
**characterized in that**, alongside the electrically conductive fibres, other reinforcing fibres are present, selected from glass fibres, aramid fibres, ceramic fibres, polyetherimide fibres, polybenzoxazole fibres, natural fibres and/or mixtures thereof.

8. Conductive foil according to Claim 7,
**characterized in that** the fibre length of the other reinforcing fibres is 0.1 to 30 mm, preferably 6 to 18 mm, particularly preferably 6 to 12 mm.

9. Conductive foil according to at least one of Claims 1 to 8,
**characterized in that** the thermoplastic matrix is composed of a thermoplastic selected from polyether ketones, poly-p-phenylene sulphide, polyetherimide, polyether sulphone, polyethylene, polyethylene terephthalate, perfluoroalkoxy polymer, polyamide and/or polysulphone.

10. Conductive foil according to at least one of Claims 1 to 9,
**characterized in that** it also comprises up to 20% by weight of additives, preferably up to 10% by weight, particularly preferably up to 7% by weight.

11. Conductive foil according to Claim 10,
**characterized in that** the additives present comprise binders, tribologically active additives, or additives for strength, impact resistance, resistance to temperature change, thermal conductivity, abrasion resistance and/or electrical conductivity.

12. Conductive foil according to Claim 10 or 11,
**characterized in that** the additives are used in the form of fibres, fibrils, fibrides, pulps, powders, nanoparticles, nanofibres and/or mixtures thereof.

13. Conductive foil according to Claim 11,
**characterized in that** the binder has been selected from compounds whose structure is based on polyacrylate, polyvinyl acetate, polyvinyl alcohol, polyurethane, resins, polyolefins, aromatic polyamides or copolymers thereof or a mixture thereof.

14. Conductive foil according to at least one of Claims 1 to 13,
**characterized in that** the electrical conductivity of the foil has been adjusted by varying the density of the foil, for a prescribed proportion by weight of the conductive reinforcing fibre.

15. Conductive foil according to at least one of Claims 1 to 13,
**characterized in that** the electrical conductivity of the foil has been adjusted by selecting the proportion by weight of the electrically conductive reinforcing fibre, for a prescribed density of the foil.

16. Electrically conductive foil according to at least one of Claims 1 to 15,
**characterized in that** the foil has punched-out sections of identical or different geometry.

17. Electrically conductive foil according to any of Claims 1 to 16,
**characterized in that** the foil has perforations.

18. Electrically conductive foil according to Claim 16 or 17,
**characterized in that** the perforations and/or the punched-out sections form a pattern.

19. Electrically conductive foil according to at least one of Claims 1 to 18,
**characterized in that** the electrical conductivity of the foil has been adjusted via the perforations and/or the punched-out sections, for a prescribed thickness and/or a prescribed proportion by weight of the conductive reinforcing fibres.

20. Electrically conductive foil according to at least one of Claims 1 to 19,
**characterized in that** its density is 0.25 g/cm³ to 6 g/cm³.

21. Conductive foil according to at least one of Claims 1 to 20,
**characterized in that** its thickness is in the range 30 to 350 µm.

22. Conductive foil according to at least one of Claims 1 to 21,
**characterized in that** the electrical contact has been formed via a metallic contact track.

23. Conductive foil according to Claim 22,
**characterized in that** the conductive contact track is a copper foil.

24. Conductive foil according to at least one of Claims 1 to 23,
**characterized in that** it takes the form of a sheet and that at least two sheets have been connected to one another in an electrically conductive manner, one underneath the other, by way of contact sites.

25. Conductive foil according to Claim 24,
**characterized in that** the connection takes place via crimping, serrated locking washers, soldering, welding, riveting, plug connections, pushbuttons and/or adhesive tapes.

26. Conductive foil according to at least one of Claims 1 to 25,
**characterized in that** the foil has been three-dimensionally shaped.

27. Conductive foil according to at least one of Claims 1 to 26,
**characterized in that**, on at least one surface, a layer preferably of an electrically insulating material has been applied.

28. Conductive foil according to Claim 27,
**characterized in that** it has been provided on both sides with an insulating layer.

29. Process for the production of an electrically conductive foil according to at least one of Claims 1 to 28 via the following steps:
a) production of a non-woven fibre mat made of a fusible thermoplastic fibre, to form the thermoplastic matrix, and of the reinforcing fibres,
b) introduction of the electrical contacts in the form of a track and
c) pressing of the non-woven fibre mat in a heated mould to form the electrically conductive foil,
where the electrical contacts in the form of a track are formed as an integral constituent of the conductive foil.

30. Process according to Claim 29,
**characterized in that** production of the non-woven fibre mat uses 55 to 97% by weight of fusible fibre and 3 to 45% by weight of reinforcing fibres, where the fibre length of the fusible fibre is smaller than that of the reinforcing fibre.

31. Process according to Claim 29 or 30,
**characterized in that** from 1 to 10% by weight of a binder is used as additive in production of the non-woven fibre mat.

32. Process according to at least one of Claims 29 to 31,
**characterized in that** the fibre length of the fusible fibre is in the range 2 to 6 mm, preferably in the range 2.5 to 3.5 mm.

33. Process according to at least one of Claims 29 to 32,
**characterized in that** the fusible fibre has been selected from fibres made of polyether ether ketone, poly-P-phenylene sulphide, polyetherimide, polyether sulphone, polyethylene, polyethylene terephthalate, perfluoroalkoxy polymer, polyamide, or else polysulphone and/or mixtures thereof.

34. Process according to at least one of Claims 29 to 33,
**characterized in that** the binder has been selected from compounds whose structure is based on polyacrylate, polyvinyl acetate, polyvinyl alcohol, polyurethane, resins, polyolefins, aromatic polyamides or copolymers thereof or a mixture thereof.

35. Process according to Claim 34,
**characterized in that** the binder takes the form of fibrils, fibrides and/or fibrous binders.

36. Process according to at least one of Claims 29 to 35,
**characterized in that** further additives are also added during production of the non-woven fibre mat (step a) of the process).

37. Process according to at least one of Claims 29 to 36,
**characterized in that** the weight per unit area of the non-woven fibre mat is adjusted to 8 to 400 g/m².

38. Process according to at least one of Claims 29 to 37,
**characterized in that** the thickness of the non-woven fibre mat is 0.1 mm to 4 mm.

39. Process according to any of Claims 29 to 38,
**characterized in that**, as contact, copper tracks are inserted.

40. Process according to any of Claims 29 to 39,
**characterized in that** the pressure used for the pressing of the non-woven fibre mat (step c) of the process) is 0.05 to 15 N/mm².

41. Process according to at least one of Claims 29 to 40,
**characterized in that** once the conductive foil has been formed, at least regions thereof are perforated and/or punched out.

42. Use of the conductive foil according to at least one of Claims 1 to 28 as floor-heating system under tiles.

43. Use of the conductive foil according to at least one of Claims 1 to 28 as floor-heating system under timber floors.

## Revendications

1. Feuille électroconductrice, qui est formée d'une matrice thermoplastique ayant 3 à 45 % en poids de fibres de renforcement et de contacts électriques,
dans laquelle les fibres de renforcement sont constituées au moins en partie de fibres de renforcement électroconductrices ayant une longueur de fibre de 0,1 à 30 mm et au moins les fibres de renforcement électroconductrices de la feuille sont présentes de manière approximativement isotrope dans la direction x-y dans la matrice thermoplastique, **caractérisée en ce que** le contact électrique fait partie intégrante de la feuille conductrice et se présente sous la forme d'une bande au moins dans deux zones de bord de la feuille.

2. Feuille électroconductrice selon la revendication 1, **caractérisée en ce que** le rapport de la conductivité électrique de la direction x à celle de la direction y se situe en l'occurrence entre 1 et 3, de préférence entre 1,2 et 2,2.

3. Feuille conductrice selon la revendication 1 ou 2, **caractérisée en ce que** les fibres de renforcement conductrices présentent une longueur de fibre dans la plage de 2 à 18 mm, de préférence de 3 à 6 mm.

4. Feuille conductrice selon au moins l'une quelconque des revendications 1 à 3,
**caractérisée en ce qu'**au moins les fibres de renforcement conductrices présentent une épaisseur de 1 à 15 µm, de préférence de 5 à 8 µm.

5. Feuille électroconductrice selon au moins l'une quelconque des revendications 1 à 4,
**caractérisée en ce que** l'on choisit les fibres de renforcement conductrices parmi des fibres de carbone, des fibres métalliques et/ou des fibres thermoplastiques dopées par un matériau conducteur.

6. Feuille conductrice selon au moins l'une quelconque des revendications 1 à 5,
**caractérisée en ce que** la proportion de fibres de renforcement électroconductrices est d'au moins 0,1 % en poids à 20 % en poids, de préférence de 0,5 à 20 % en poids.

7. Feuille conductrice selon au moins l'une quelconque des revendications 1 à 6,
**caractérisée en ce que** sont présentes, outre les fibres électroconductrices, d'autres fibres de renforcement choisies parmi des fibres de verre, des fibres d'aramides, des fibres céramiques, des fibres de polyétherimides, des fibres de polybenzoxazoles, des fibres naturelles et/ou leurs mélanges.

8. Feuille conductrice selon la revendication 7,
**caractérisée en ce que** les autres fibres de renforcement présentent une longueur de fibre de 0,1 à 30 mm, de préférence de 6 à 18 mm, mieux encore de 6 à 12 mm.

9. Feuille conductrice selon au moins l'une quelconque des revendications 1 à 8,
**caractérisée en ce que** la matrice thermoplastique est formée d'un thermoplastique choisi parmi des polyéthercétones, un poly(sulfure de p-phénylène), un polyétherimide, une polyéthersulfone, le polyéthylène, le poly-(téréphtalate d'éthylène), un polymère de perfluoro-alcoxy, un polyamide et/ou une polysulfone.

10. Feuille conductrice selon au moins l'une quelconque des revendications 1 à 9,
**caractérisée en ce qu'**elle contient en complément jusqu'à 20 % en poids, de préférence jusqu'à 10 % en poids, mieux encore jusqu'à 7 % en poids d'additifs.

11. Feuille conductrice selon la revendication 10,
**caractérisée en ce qu'**elle contient, comme additifs, des liants, des additifs efficaces au plan tribologique, des additifs pour apporter solidité, résistance aux chocs, résistance à la température, conductibilité thermique, résistance à l'abrasion et/ou conductivité électrique.

12. Feuille conductrice selon la revendication 10 ou 11, **caractérisée en ce que** les additifs sont employés sous la forme de fibres, de fibrilles, de fibrides, de pâtes, de poudres, de nanoparticules, de nanofibres et/ou de mélanges de ceux-ci.

13. Feuille conductrice selon la revendication 11,
**caractérisée en ce que** l'on choisit le liant parmi des composés qui sont constitués à base de polyacrylate, de poly(acétate de vinyle), de poly(alcool de vinyle), de polyuréthanne, de résines, de polyoléfines, de polyamides aromatiques ou de leurs copolymères ou de leurs mélanges.

14. Feuille conductrice selon au moins l'une quelconque des revendications 1 à 13,
**caractérisée en ce que** la conductivité électrique de la feuille est réglée, pour une fraction en poids prédéfinie de fibres de renforcement conductrices, en faisant varier la densité de la feuille.

15. Feuille conductrice selon au moins l'une quelconque des revendications 1 à 13,
**caractérisée en ce que** la conductivité électrique de la feuille est réglée, pour une densité prédéfinie de la feuille, en choisissant la fraction en poids de fibres de renforcement électroconductrices.

16. Feuille électroconductrice selon au moins l'une quelconque des revendications 1 à 15,
**caractérisée en ce que** la feuille présente des découpes de géométrie identique ou différente.

17. Feuille électroconductrice selon l'une quelconque des revendications 1 à 16,
**caractérisée en ce que** la feuille présente des perforations.

18. Feuille électroconductrice selon la revendication 16 ou 17,
**caractérisée en ce que** les perforations et/ou les découpes forment un motif.

19. Feuille électroconductrice selon au moins l'une quelconque des revendications 1 à 18,
**caractérisée en ce que** la conductivité électrique de la feuille est réglée par les perforations et/ou les découpes pour une épaisseur prédéfinie et/ou une fraction en poids prédéfinie de fibres de renforcement électroconductrices.

20. Feuille électroconductrice selon au moins l'une quelconque des revendications 1 à 19,
**caractérisée en ce qu'**elle présente une masse volumique de 0,25 g/cm³ à 6 g/cm³.

21. Feuille conductrice selon au moins l'une quelconque des revendications 1 à 20,
**caractérisée en ce qu'**elle présente une épaisseur dans la plage de 30 à 350 µm.

22. Feuille conductrice selon au moins l'une quelconque des revendications 1 à 21,
**caractérisée en ce que** le contact électrique est assuré par une piste de contact métallique.

23. Feuille conductrice selon la revendication 22,
**caractérisée en ce que** la piste de contact conductrice est une feuille de cuivre.

24. Feuille conductrice selon au moins l'une quelconque des revendications 1 à 23,
**caractérisée en ce qu'**elle se présente sous la forme d'une plaque et **en ce qu'**au moins deux plaques sont connectées entre elles de manière électroconductrice par des points de contact.

25. Feuille conductrice selon la revendication 24, **caractérisée en ce que** la connexion se fait par sertissage, application de rondelles à dents chevauchantes, brasage, soudage, rivetage, application de raccords enfichables, de boutons-poussoirs et/ou de rubans adhésifs.

26. Feuille conductrice selon au moins l'une quelconque des revendications 1 à 25,
**caractérisée en ce que** la feuille est façonnée en trois dimensions.

27. Feuille conductrice selon au moins l'une quelconque des revendications 1 à 26,
**caractérisée en ce que** l'on applique, sur au moins une surface, une couche constituée de préférence d'un matériau isolant au plan électrique.

28. Feuille conductrice selon la revendication 27,
**caractérisée en ce qu'**elle est pourvue de part et d'autre d'une couche isolante.

29. Procédé de fabrication d'une feuille électroconductrice selon au moins l'une quelconque des revendications 1 à 28 par les étapes suivantes consistant à :
a) fabriquer un mat fibreux non tissé constitué d'une fibre de fusion thermoplastique, destinée à la formation de la matrice thermoplastique, et des fibres de renforcement,
b) introduire les contacts électriques en forme de bande, et
c) comprimer le mat fibreux non tissé sous pression dans un outil chauffé pour former la feuille électroconductrice,
dans lequel les contacts électriques en forme de bande font partie intégrante de la feuille conductrice.

30. Procédé selon la revendication 29,
**caractérisé en ce que**, pour fabriquer le mat fibreux non tissé, on utilise 55 à 97 % en poids de fibres fondues et 3 à 45 % en poids de fibres de renforcement, la longueur des fibres fondues étant inférieure à celle des fibres de renforcement.

31. Procédé selon la revendication 29 ou 30,
**caractérisé en ce que**, dans la fabrication du mat fibreux non tissé, on ajoute comme additif 1 à 10 % en poids d'un liant.

32. Procédé selon au moins l'une quelconque des revendications 29 à 31,
**caractérisé en ce que** la longueur des fibres fondues se situe dans la plage de 2 à 6 mm, de préférence dans la plage de 2,5 à 3,5 mm.

33. Procédé selon au moins l'une quelconque des revendications 29 à 32,
**caractérisé en ce que** l'on choisit la fibre de fusion parmi des fibres de polyétheréthercétone, de poly(sulfure de p-phénylène), de polyétherimide, de polyéthersulfone, de polyéthylène, de poly(téréphtalate d'éthylène), de polymère de perfluoro-alcoxy, de polyamide, ainsi que de polysulfone et/ou de mélanges de ceux-ci.

34. Procédé selon au moins l'une quelconque des revendications 29 à 33,
**caractérisé en ce que** l'on choisit le liant parmi des composés qui sont constitués à base de polyacrylate, de poly(acétate de vinyle), de poly(alcool de vinyle), de polyuréthanne, de résines, de polyoléfines, de polyamides aromatiques ou de leurs copolymères ou de leurs mélanges.

35. Procédé selon la revendication 34,
**caractérisé en ce que** le liant se présente sous forme de fibrilles, de fibrides et/ou de liants fibreux.

36. Procédé selon au moins l'une quelconque des revendications 29 à 35,
**caractérisé en ce que**, pendant la fabrication du mat fibreux non tissé (étape de procédé a)), on ajoute encore d'autres additifs.

37. Procédé selon au moins l'une quelconque des revendications 29 à 36,
**caractérisé en ce que** le mat fibreux non tissé est réglé sur un grammage de 8 à 400 g/m²_{.}

38. Procédé selon au moins l'une quelconque des revendications 29 à 37,
**caractérisé en ce que** le mat fibreux non tissé présente une épaisseur de 0,1 mm à 4 mm.

39. Procédé selon l'une quelconque des revendications 29 à 38,
**caractérisé en ce que** l'on insère des pistes de cuivre comme contacts.

40. Procédé selon l'une quelconque des revendications 29 à 39,
**caractérisé en ce que** la compression du mat fibreux non tissé (étape de procédé c)) s'effectue à une pression de 0,05 à 15 N/mm².

41. Procédé selon au moins l'une quelconque des revendications 29 à 40,
**caractérisé en ce que**, après la formation de la feuille conductrice, celle-ci est perforée et/ou découpée au moins par segments.

42. Utilisation de la feuille conductrice selon au moins l'une quelconque des revendications 1 à 28 comme plancher chauffant sous des carrelages.

43. Utilisation de la feuille conductrice selon au moins l'une quelconque des revendications 1 à 28 comme plancher chauffant sous des planchers en bois.
